# DEMANDE DE BREVET EUROPEEN

(11) **EP 1 912 261 A1**
(43) Date de publication de la demande: **16.04.2008**
(21) Numéro de dépôt: 07291237.1
(22) Date de dépôt: 10.10.2007
(51) Int. Cl.: H01L 31/048, H01R 9/24

(54) **Dispositif de raccordement électrique notamment pour panneau solaire électrique**

(30) Priorité: 13.10.2006 FR 0608984
(71) Demandeur: Courtaigne, Bertrand, 75016 Paris (FR)
(72) Inventeur: Courtaigne, Bertrand, 75016 Paris (FR)
(74) Mandataire: de Saint-Palais, Arnaud Marie

(57) **Abrégé**

Le dispositif de raccordement selon l'invention comprend un boîtier (1) renfermant au moins deux pistes conductrices (P₁, P₄) comportant chacune une plage de liaison, un organe de connexion rapide d'un élément conducteur d'un appareil électrique sur lequel est posé le boîtier (1), un élément d'ancrage constitué par au moins une première languette découpée sur le bord latéral de la plage de liaison et repliée à angle droit de manière à pouvoir s'engager dans une cavité du boîtier (1), un élément de connexion à engagement à force constitué par une seconde languette découpée sur un bord latéral de ladite plage et repliée à angle droit à l'opposé de l'élément d'ancrage et une broche de connexion sur laquelle peut s'engager la cosse de connexion d'un câble électrique.

## Description

La présente invention concerne un dispositif de raccordement électrique particulièrement adapté aux panneaux solaires électriques ou à d'autres producteurs d'énergie.

D'une manière générale, les panneaux solaires électriques sont composés de cellules réagissant à la chaleur du soleil et produisant un courant électrique sous son effet.

Ces cellules sont tenues entre des couches de verre ou de plastique transparent et elles sont reliées par un réseau de pistes en général étamées qui rassemble le courant de chacune d'entre elles.

Ces pistes sont rassemblées sur un des bords des panneaux et servent au raccordement électrique des panneaux solaires entre eux ou avec un élément extérieur.

Les pistes rassemblées au bord des panneaux comportent usuellement un pôle positif, un pôle négatif et une ou plusieurs autres pistes qui sont raccordées aux pistes des pôles positifs et négatifs par une diode.

Ce sont ces pistes qu'il faut pouvoir raccorder à un ou des câbles pour alimenter un appareil ou pour les connecter aux pistes de panneaux voisins de façon à mettre en série ou en parallèle les pôles positifs et négatifs de plusieurs panneaux et de drainer ainsi le courant produit par une rangée de panneaux vers un collecteur de puissance ainsi rassemblée.

Chaque panneau est équipé d'un boîtier de connexion usuellement collé sur sa surface.

Les boîtiers de connexion connus dont le fond est ouvert sont usuellement collés à la surface du module et les pistes sortant du module passent par la découpe du fond pour être raccordées sur un bornier contenu dans ledit boîtier.

Ces borniers permettent de connecter entre deux bornes des diodes dont les pattes ont dû être courbées et de connecter les câbles des polarités positives et négatives qui sortent du boîtier.

Dans certains modèles de boîtiers connus, toutes les connexions internes sont soudées avec tous les problèmes connus des défauts de soudure, des ruptures dues aux vibrations et aux chocs ou des soudures sèches.

En outre, les soudures traditionnelles à l'étain fondent à des températures peu élevées.

Dans d'autres borniers, les bornes font intervenir des éléments de conduction composés en alliage cuivreux pour la bonne conduction électrique et d'autres éléments de serrage élastique en acier à ressort qui les rendent coûteux à fabriquer et encombrants.

En outre, l'entrée des câbles dans ces boîtiers se fait par des presse-étoupe traditionnels à serrage par bague filetée.

On comprend que l'assemblage de ces boîtiers, qui force à passer les câbles dans les presse-étoupe pour les connecter au boîtier sans préparation extérieure possible, puis à serrer les presse-étoupe pour garantir l'étanchéité, est long à assembler et laisse la garantie de l'étanchéité dépendante de l'action de l'opérateur de montage.

On comprend aussi que les borniers, s'ils présentent un organe de connexion en forme de douille, forcent à plier et couper à mesure les pattes des diodes qu'on doit mettre à cheval entre deux bornes voisines.

Les boîtiers traditionnels présentent aussi des problèmes d'encombrement notamment lorsque l'on veut les utiliser sur des modules double face, par exemple où toute la surface du module est utile pour recevoir l'ensoleillement et où le boîtier doit être autant que possible encastré dans le profil en aluminium qui encadre le module.

Dans ce cas, le boîtier doit évidemment être le plus compact possible tout en gardant la possibilité d'ouvrir le couvercle pour donner, en situation d'installation définitive, accès aux diodes qu'on peut être amené à changer.

L'invention a donc plus particulièrement pour but de résoudre ces problèmes.

A cet effet, elle propose un dispositif de connexion électrique comprenant un boîtier relativement plat refermé par un couvercle et renfermant des pistes conductrices sur lesquelles peuvent venir se fixer des composants électroniques, ces pistes conductrices comportant au moins deux éléments de connexion sur chacun desquels peut venir se connecter l'élément conducteur d'un câble électrique passant au travers d'orifices prévus dans le boîtier.

Selon l'invention, ce dispositif comprend au moins deux pistes conductrices rigides réalisées par découpe et pliage d'une bande en matière électriquement conductrice, chacune de ces pistes étant réalisée en une seule et même pièce et comportant une plage de liaison, un organe de connexion rapide d'un élément conducteur d'un appareil électrique sur lequel est posé le boîtier, un élément d'ancrage constitué par au moins une première languette découpée sur le bord latéral de la plage de liaison et repliée à angle droit de manière à pouvoir s'engager à force dans une cavité formée dans le boîtier, un élément de connexion à engagement à force constitué par une seconde languette découpée sur un bord latéral de ladite plage et repliée à angle droit à l'opposé de l'élément d'ancrage et une broche de connexion sur laquelle peut s'engager une cosse de connexion. De préférence, lorsqu'elles sont fixées dans le boîtier, les deux pistes s'étendent parallèlement l'une à l'autre avec les deux éléments de connexion en regard l'un de l'autre de manière à pouvoir y engager à force les deux pattes conductrices coaxiales d'un composant électronique tel que, par exemple, une diode.

Grâce à ces dispositions, on obtient un dispositif de connexion de faibles dimensions, réalisable industriellement à des cadences de production élevées et à très faibles coûts.

Le boîtier et le couvercle peuvent être respectivement réalisés en une seule pièce de matière plastique moulée. Les pistes conductrices, réalisées chacune en une seule et même pièce, peuvent être identiques et peuvent être engagées à force dans le boîtier au moyen d'un outillage automatisé. Les composants électroniques peuvent être fixés, sans soudure et sans contrainte mécanique risquant de les détériorer, sur les couples d'élément de connexion au moyen de systèmes de préhension automatiques classiques.

Avantageusement, l'organe de connexion rapide pourra être réalisé par pliage et cintrage de deux languettes découpées sur deux bords opposés de la plage de liaison, une première de ces languettes présentant une forme en L dont l'aile inférieure vient en retour sous la plage de liaison, l'autre languette étant recourbée à la façon d'un ressort de manière à venir s'engager par une extrémité dans une échancrure réalisée dans la première languette, de manière à réaliser une pince élastique dans laquelle peut venir s'engager un conducteur.

Les languettes constituant les susdits éléments de connexion peuvent comprendre une échancrure en forme de V prolongée par une fente de largeur légèrement inférieure à celle des pattes conductrices du composant électronique venant s'y fixer.

Par ailleurs, l'assemblage du couvercle sur le boîtier devra être étanche. A cet effet, le couvercle pourra comprendre au niveau de son contact avec le bord supérieur du boîtier une gorge périphérique contenant un joint d'étanchéité par exemple en élastomère.

Pour satisfaire aux exigences des normes en vigueur, cette étanchéité doit être efficace notamment lors d'un lavage au jet du boîtier tout en permettant une évacuation d'eau susceptible de s'être introduite accidentellement dans le boîtier.

En conséquence, l'invention propose de réaliser, de préférence au niveau d'un point bas du couvercle, un évasement de la gorge s'étendant autour du joint et débouchant à l'extérieur au niveau d'un rebord du couvercle venant en retour contre la paroi latérale du boîtier.

Bien entendu, ce problème d'étanchéité se pose également au niveau des passages de câble au travers du boîtier. Habituellement, on utilise à cet effet un passage de câble équipé d'une presse-étoupe, c'est-à-dire d'un dispositif relativement complexe et donc coûteux.

En vue de résoudre ce problème d'une façon simple, peu coûteuse et néanmoins efficace, l'invention prévoit, pour le passage de chacun des câbles, une encoche comprenant deux bords parallèles et un fond incurvé, cette encoche étant réalisée dans la paroi latérale et débouchant au niveau de la bordure supérieure du boîtier. Cette encoche est délimitée par une surface portant une gorge longitudinale débouchant dans la bordure supérieure du boîtier au droit du joint d'étanchéité du couvercle lorsque celui-ci est assemblé sur le boîtier.

Dans cette encoche est disposé un opercule en matière résiliente telle que de l'élastomère dont les bords sont engagés à force dans la gorge. Cet opercule comprend un orifice central de section inférieure à celle du câble dont il constitue le passage. Le bord supérieur de l'opercule dépasse légèrement en dehors de l'encoche de manière à venir porter sur le joint d'étanchéité lorsque le boîtier est refermé par le couvercle.

Grâce à ces dispositions, on obtient, grâce à un simple opercule facilement mis en place, une triple étanchéité câble/opercule - opercule/boîtier - opercule/couvercle avec une pression d'étanchéité parfaitement maîtrisée.

Un mode d'exécution de l'invention sera décrit ci-après, à titre d'exemple non limitatif, avec référence aux dessins annexés dans lesquels :
La figure 1 est une vue en perspective éclatée d'un dispositif de connexion selon l'invention ;
La figure 2 est une vue de dessus du dispositif illustré figure 1 ;
Les figures 3 et 4 sont des coupes selon A/A et B/B de la figure 2 ;
Les figures 5 et 6 sont des vues respectivement en coupe et en vue de dessus d'une piste du dispositif de la figure 1 ;
La figure 7 est une coupe selon C/C de la figure 6 ;

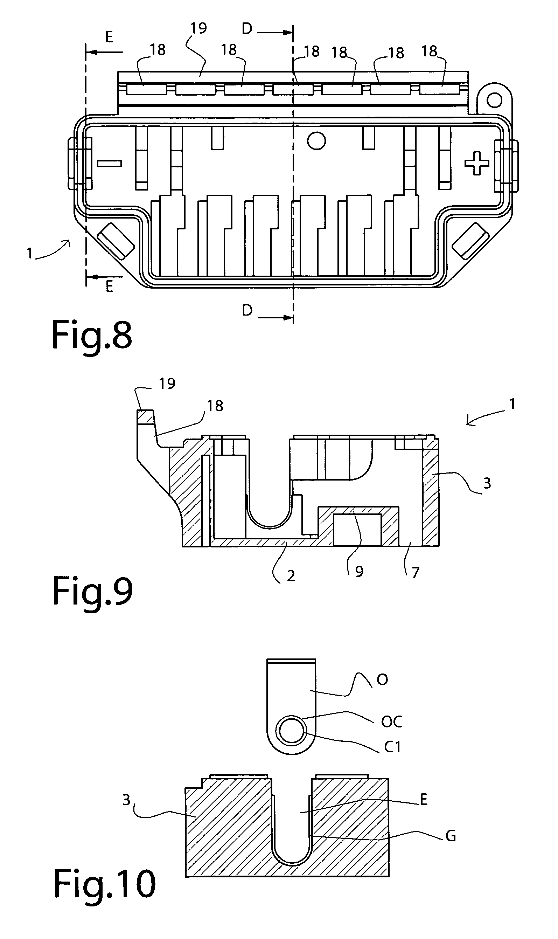

La figure 8 est une vue de dessus du boîtier de la figure 1 ;
La figure 9 est une coupe selon D/D de la figure 8 ;
La figure 10 est une coupe selon E/E de la figure 8 avec, en correspondance, une vue en coupe de l'opercule au travers duquel passe un câble.

Dans cet exemple, le dispositif de connexion comprend un boîtier 1 comprenant un fond 2 présentant une forme trapézoïdale T dont la grande base est prolongée par une portion rectangulaire R et une paroi périphérique 3 dont la bordure supérieure 4 s'étend selon un parcours dont la forme résulte de la superposition de la forme rectangulaire R et d'une forme rectangulaire R' dont un côté correspond à la petite base de la forme trapézoïdale T du fond.

La portion de paroi qui s'étend à partir de chacun des deux petits côtés de la forme rectangulaire R du fond 2 comprend une encoche E de forme rectangulaire à fond arrondi, débouchant au niveau de la bordure supérieure. Ces deux échancrures E sont destinées à permettre le passage des extrémités de deux câbles électriques C₁, C₂ munis de cosses de connexion.

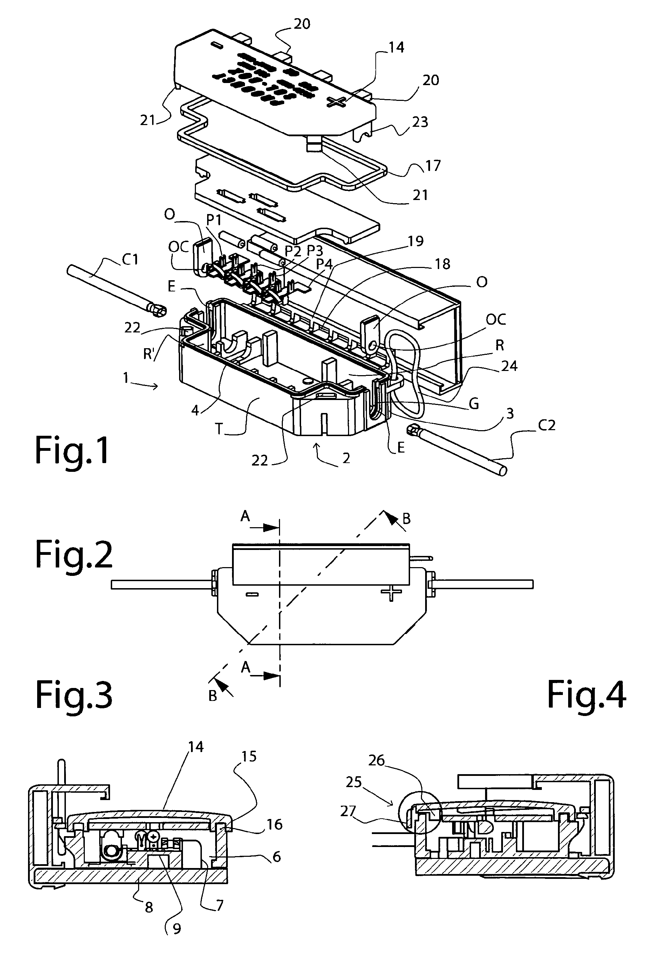

Comme ceci est visible sur les figures 3 et 4, le fond 2 comprend dans une région adjacente à la petite base une fente longitudinale 6 destinée à permettre le passage de connecteurs 7 d'un circuit électrique porté par une plaque 8 d'un dispositif par exemple un module photovoltaïque sur lequel est fixé de façon étanche le boîtier 1.

Par ailleurs, le fond du boîtier comprend un étagement 9 servant de support à des pistes conductrices P₁ à P₄ qui s'étendent transversalement à l'intérieur du boîtier 1, ainsi que des cloisons transversales assurant une isolation électrique entre les pistes conductrices P₁ à P₄.

Le boîtier 1 est refermé par un couvercle de forme bombée 14 dont le contour est similaire à celui du boîtier 1 et qui comprend un rebord périphérique 15 muni d'une gorge longitudinale 16 disposée en regard de la bordure supérieure 4 de la paroi périphérique du boîtier 1. Cette gorge 16 renferme un joint d'étanchéité 17 en matière résiliente telle que de l'élastomère.

La fixation du couvercle 14 sur le boîtier 1 est assurée :
- d'une part, au moyen d'une charnière séparable constituée par une série d'orifices 18 formés dans un prolongement 19 de la paroi transversale du boîtier 1 au niveau de sa grande base, et de tenons 20 solidaires de la grande base du boîtier 1 qui s'engagent dans lesdits orifices 18 de manière à constituer la charnière, et
- d'autre part, des crochets élastiques 21 qui s'étendent à partir du bord du couvercle 14 opposé à la charnière, perpendiculairement au plan général dudit couvercle 14 de manière à pouvoir s'encliqueter dans des orifices 22 correspondants, prévus dans le boîtier 1.

La position des orifices 18, des tenons 20, des crochets 21 et des orifices 22 est prévue de manière à ce qu'en position fermée et verrouillée du couvercle 14 sur le boîtier 1 (obtenue en fin de course de basculement du couvercle 14 sur le boîtier 1) la pression d'étanchéité exercée sur le joint 17 par le rebord 4 du boîtier 1 soit homogène sur toute sa longueur.

Par ailleurs, le couvercle 14 comprend, au niveau de ses deux petits côtés opposés, deux prolongements à angle droit 23 destinés à assurer une protection des joints équipant les passages des câbles C₁, C₂ qui rentrent dans le boîtier 1.

En outre, le couvercle 14 est rattaché au boîtier 1 par un lien 24 qui assure son imperdabilité.

Comme précédemment mentionné, le couvercle 14 est muni d'un évent 25 servant à éliminer les condensations d'humidité qui pourraient se produire à l'intérieur du boîtier 1.

Cet évent 25 est réalisé grâce à un évasement 26 de la gorge 16 qui entoure le joint d'étanchéité 17 et qui réalise donc un parcours en chicane. L'orifice de sortie de ce cheminement est en outre protégé à l'extérieur par un écran 27 constitué par une protubérance du couvercle 14. Ainsi, cet évent 25 répond aux exigences en matière de lavage au jet sous pression : Le liquide de lavage ne pourra pas s'introduire à l'intérieur du boîtier 1.

Dans cet exemple, le boîtier 1 renferme un circuit électronique comportant quatre pistes conductrices P₁ à P₄, à savoir : deux pistes d'extrémité P₁, P₄ et deux pistes centrales P₂, P₃.

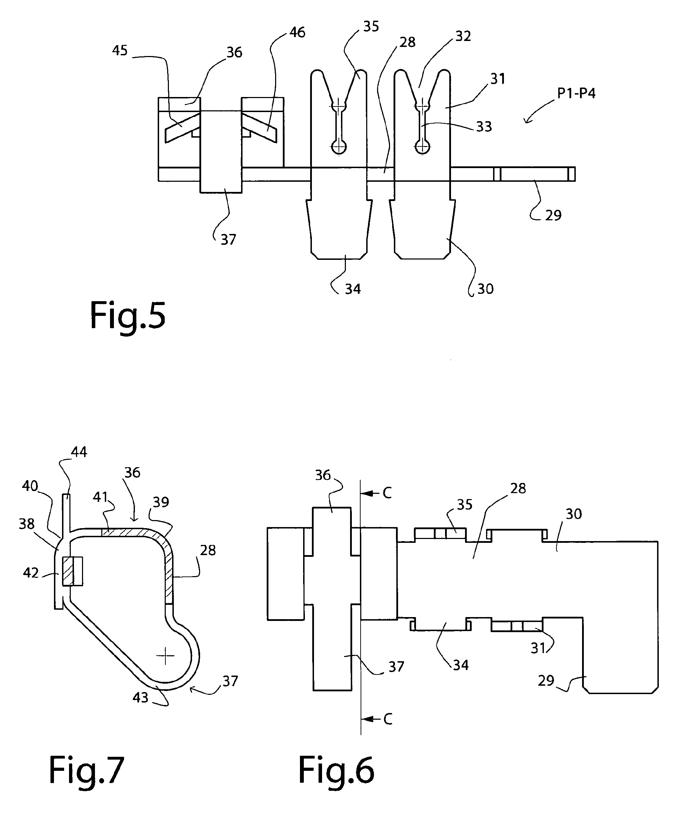

Telles qu'illustrées sur les figures 5 à 7, les pistes d'extrémité P₁, P₄ comprennent chacune une plage de liaison rectangulaire allongée 28 qui s'étend transversalement à l'intérieur du boîtier 1 de la grande base à la petite base.

Cette plage de liaison (ou trace) 28 est prolongée latéralement par :
• Une première plage latérale, de forme rectangulaire, à angles abattus qui constitue une broche de connexion 29 sur laquelle peut s'engager une cosse équipant de façon classique un câble électrique C₁, C₂.
• Une deuxième plage latérale 30 repliée à angle droit vers le fond du boîtier 1. Cette plage 30 qui présente un profil d'accrochage est destinée à venir s'engager à force dans une cavité prévue dans le fond du boîtier 1 de manière à assurer la fixation de la pise P₁, P₄ sur ledit fond.
• Une troisième plage latérale 31 qui s'étend du bord de la piste opposé à la deuxième patte. Cette plage est repliée à angle droit en direction du couvercle 14 et est destinée à assurer une fixation sans soudure d'une patte conductrice d'un composant électronique. A cet effet, elle comprend une échancrure en forme de V, 32 prolongée par une fente 33 munie de deux évasements successifs.
• Des quatrième et cinquième plages latérales 34, 35 similaires aux deuxième et troisième plages 30, 31.
• Des sixième et septième plages 36, 37 qui s'étendent respectivement depuis les deux bords latéraux de la piste 28, au niveau de la fente 7 du boîtier 1. Ces deux plages 36, 37 sont conformées de manière à constituer un organe de connexion rapide à pincement. A cet effet, la plage 36 présente une échancrure centrale 38 et est repliée à angle droit autour de deux lignes de pliage successives 39, 40 de manière à présenter un tronçon 41 perpendiculaire à la plage de liaison 28 et un tronçon 42 qui s'étend parallèlement, en retour sous la plage de liaison 28. L'échancrure 38 sépare en deux le tronçon 42 et s'étend sur une portion du tronçon 41 au-delà de la ligne de pliage 40.

La plage 37 présente une portion incurvée 43 jouant le rôle de ressort et une portion droite 44 parallèle à la plage de liaison 28 qui s'engage dans l'échancrure 42 de la portion 41. La portion 44 est elle-même prolongée par deux ailettes obliques de guidage 45, 46.

Grâce à ces dispositions, en écartant le tronçon 42 de la portion 44 on peut engager dans l'intervalle ainsi créé un connecteur 7 du circuit électronique de la plaque 8. Le relâchement de la portion 44 provoque ensuite le pincement de ce connecteur 7.

Comme précédemment mentionné, les câbles électriques C₁, C₂ dont les cosses viennent se fixer sur les broches de connexion 29 passent au travers des encoches E.

L'étanchéité au passage de ces encoches E est obtenue au moyen des dispositions suivantes :

L'encoche E est délimitée par une surface (chant) portant une gorge longitudinale G débouchant dans la bordure supérieure du boîtier 1, au droit du joint d'étanchéité 17 en position assemblée du couvercle 14 sur le boîtier 1.

Dans cette encoche E est disposé un opercule O en matière résiliente telle que de l'élastomère dont les bords sont engagés à force dans la gorge G (l'épaisseur de l'opercule O étant légèrement supérieure à la largeur de la gorge G).

Cet opercule O comprend un orifice central OC dans lequel passe le câble C₁, C₂, le diamètre de l'orifice O étant légèrement inférieur à celui du câble C₁, C₂.

Comme précédemment mentionné, le bord supérieur de l'opercule O dépasse légèrement en dehors de l'encoche de manière à venir exercer une pression sur le joint d'étanchéité 17 lorsque le boîtier 1 est refermé par le couvercle 14.

Dans cet exemple, les deux pistes centrales P₂, P₃ présentent une structure similaire à celle des pistes d'extrémité à la différence qu'elles ne comprennent pas de broche de connexion 29 et qu'en conséquence, la plage de liaison 28 s'en trouve raccourcie d'autant.

Grâce à la disposition des pistes P₁ à P₄ sur le fond du boîtier 1, on dispose de paires de plages latérales 31, 35 en regard, sur lesquelles il est possible de connecter sans soudure des composants électroniques selon un schéma de montage préétabli.

Bien entendu, le nombre de pistes centrales pourra être différent de deux, voire même égal à zéro.

Selon un mode d'exécution particulier de l'invention, les pistes conductrices P₁ à P₄ pourront être fabriquées en laiton écroui ou en bronze ou un autre métal élastique conducteur découpé et plié sans avoir à utiliser deux matières différentes : l'une pour la conduction, l'autre pour l'élasticité.

## Revendications

1. Dispositif de raccordement électrique notamment pour panneau solaire électrique, ce dispositif comprenant un boîtier relativement plat (1) refermé par un couvercle (14) et renfermant des pistes conductrices (P₁ à P₄) sur lesquelles peuvent venir se fixer des composants électroniques, ces pistes conductrices (P₁ à P₄) comportant au moins deux éléments de connexion (31, 35) sur chacun desquels peut venir se connecter l'élément conducteur d'un câble électrique (C₁, C₂) passant au travers d'orifices (E) prévus dans le boîtier (1),
**caractérisé en ce qu'**il comprend au moins deux pistes conductrices rigides (P₁, P₄) réalisées par découpe et pliage d'une bande en matière électriquement conductrice, chacune de ces pistes (P₁, P₄) étant réalisée en une seule et même pièce et comportant une plage de liaison (28), un organe de connexion rapide (36, 37) d'un élément conducteur d'un appareil électrique sur lequel est posé le boîtier (1), un élément d'ancrage (34) constitué par au moins une première languette découpée sur le bord latéral de la plage de liaison (28) et repliée à angle droit de manière à pouvoir s'engager à force dans une cavité formée dans le boîtier (1), un élément de connexion à engagement à force (31, 35) constitué par une seconde languette découpée sur un bord latéral de ladite plage (28) et repliée à angle droit à l'opposé de l'élément d'ancrage (34) et une broche de connexion (29) sur laquelle peut s'engager une cosse de connexion, les deux pistes (P₁, P₄) s'étendant parallèlement l'une à l'autre avec les deux éléments de connexion en regard l'un de l'autre de manière à y engager à force deux pattes conductrices coaxiales d'un composant électronique.

2. Dispositif selon la revendication 1,
**caractérisé en ce qu'**il comprend au moins une piste conductrice supplémentaire (P₂, P₃) similaire aux susdites pistes (P₁, P₄) mais exempte de broches de connexion.

3. Dispositif selon l'une des revendications 1 et 2,
**caractérisé en ce que** le susdit organe de connexion rapide est réalisé par pliage et cintrage de deux languettes (36, 37) découpées sur deux bords opposés de la plage de liaison (28), une première de ces languettes (36) présentant une forme en L dont l'aile inférieure vient en retour sous la plage de liaison (28), l'autre languette (37) étant recourbée à la façon d'un ressort de manière à venir s'engager par une extrémité dans une échancrure réalisée dans la première languette (36), de manière à réaliser une pince élastique dans laquelle peut venir s'engager un conducteur.

4. Dispositif selon l'une des revendications précédentes,
**caractérisé en ce que** les languettes constituant les susdits éléments de connexion (31, 35) comprennent une échancrure en forme de V prolongée par une fente de largeur légèrement inférieure à celle des pattes conductrices du composant électronique venant s'y fixer.

5. Dispositif selon l'une des revendications précédentes,
**caractérisé en ce que** le couvercle (14) comprend au niveau de son contact avec le bord supérieur (4) du boîtier (1) une gorge périphérique (16) contenant un joint d'étanchéité (17) par exemple en élastomère, et **en ce que** la fixation du couvercle (14) sur le boîtier (1) est assurée :
- d'une part, au moyen d'une charnière séparable constituée par une série d'orifices (18) formés dans un prolongement (19) de la paroi transversale du boîtier (1) au niveau de sa grande base, et de tenons (20) solidaires de la grande base du boîtier (1) qui s'engagent dans lesdits orifices (18) de manière à constituer la charnière, et
- d'autre part, des crochets élastiques (21) qui s'étendent à partir du bord du couvercle (14) opposé à la charnière, perpendiculairement au plan général dudit couvercle (14) de manière à pouvoir s'encliqueter dans des orifices (22) correspondants, prévus dans le boîtier (1).

6. Dispositif selon la revendication 5,
**caractérisé en ce qu'**il comprend un évent (25) formé par un évasement de la gorge (16) s'étendant autour du joint (17) et débouchant à l'extérieur au niveau d'un rebord (27) du couvercle (14) venant en retour contre la paroi latérale (3) du boîtier (1).

7. Dispositif selon l'une des revendications 5 et 6,
**caractérisé en ce qu'**il comprend, pour le passage de chacun des susdits câbles (C₁, C₂), une encoche (E) comprenant deux bords parallèles et un fond incurvé, cette encoche (E) étant réalisée dans la paroi latérale (3) et débouchant au niveau de la bordure supérieure (4) du boîtier (1), **en ce que** cette encoche (E) est délimitée par une surface portant une gorge longitudinale (G) débouchant dans la bordure supérieure (4) du boîtier (1) au droit du joint d'étanchéité (17) du couvercle (14) lorsque celui-ci est assemblé sur le boîtier (1), **en ce que**, dans cette encoche (E), est disposé un opercule (O) en matière résiliente telle que de l'élastomère dont les bords sont engagés à force dans la gorge (G), **en ce que** cet opercule (O) comprend un orifice central (OC) de section inférieure à celle du câble (C₁, C₂) dont il constitue le passage, et **en ce que** le bord supérieur de l'opercule (O) dépasse légèrement en dehors de l'encoche (E) de manière à venir porter sur le joint d'étanchéité (17) lorsque le boîtier (1) est refermé par le couvercle (14).
